(19)

Europäisches Patentamt

European Patent Office

Office européen des brevets

(11) **EP 4 699 778 A1**

(12) **EUROPEAN PATENT APPLICATION**

(43) Date of publication:
**25.02.2026 Bulletin 2026/09**

(21) Application number: **25196302.1**

(22) Date of filing: **16.08.2025**

(51) International Patent Classification (IPC):
***B29C 45/28*** (2006.01)    ***B29C 45/82*** (2006.01)

(52) Cooperative Patent Classification (CPC):
**B29C 45/281; B29C 45/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.08.2024 IT 202400019198**

(71) Applicant: **Inglass S.p.A.**
**31020 San Polo di Piave (Treviso) (IT)**

(72) Inventors:
• **ROSSI, Massimo**
 **31020 San Polo di Piave (TV) (IT)**
• **FUSER, Daniele**
 **31020 San Polo di Piave (TV) (IT)**
• **DE NADAI, Massimo**
 **31020 San Polo di Piave (TV) (IT)**

(74) Representative: **Citron, Massimiliano**
 **Via Primo Maggio, 6**
 **31020 San Fior (TV) (IT)**

(54) **METHOD AND SYSTEM FOR REGULATING THE FLOW OF MOLTEN MATERIAL INJECTED FROM A NOZZLE INTO A MOLD**

(57)    A method is described for regulating the flow of molten material injected from a nozzle into a mold, wherein during an injection cycle pressurized fluid is selectively injected from a reservoir into an actuator that drives a shutter of the nozzle; and the shutter is moved to an opening or closing position according to the direction of flow of the fluid.

To achieve a wider range of speeds for the shutter, during opening phase of the the shutter, a line, carrying the fluid exiting the actuator, is fluidically connected simultaneously to the inlet of at least two flow regulators so that they are traversed by fluid to regulate the flow rate thereof.

Fig. 4

EP 4 699 778 A1

**Description**

The invention relates to a method and system for regulating the flow of molten material injected from a nozzle into a mold by controlling a shutter.

In injection molding machines, taken here as an example, molten material is injected into a mold through one or more injection nozzles whose opening and closing is regulated by one or more shutter stems controlled by an actuator.

For complex or large parts produced by multi-injection and/or sequential injection method, positional control of the shutter stem, which opens and closes the nozzle, is critical to achieving a high quality finish, particularly to control the flow rate of molten material along with the injection pressure into the mold cavity.

Currently, for molding valuable products, the shutters are controlled by electric actuators (because they allow a wide range of adjustments and controls), but these require complex and expensive control devices (an electronic control unit + related software + sensors + complex wiring + skilled operators).

The use of fluid actuators is therefore more convenient and more familiar to users for certain applications. An example is the system in Fig. 2 of EP3490777, which, however, suffers from an excessive lack of control. In particular, the dynamics of the shutter is limited by the number of different flow regulators.

The main object of the invention is to improve this state of the art.

Another particular object is to improve systems such as the one in EP3490777 by making them more high-performance, and/or to allow, in systems such as the one in EP3490777, more programming freedom for the shutter dynamics.

One aspect of the invention relates to a method of regulating the flow of molten material injected from a nozzle into a mold, wherein during an injection cycle

pressurized fluid is selectively injected from a reservoir into an actuator which drives a nozzle shutter;
the shutter is brought to an opening or closing position according to the flow direction of the fluid;
wherein during the injection cycle, preferably during the shutter opening phase,
a line carrying the fluid which exits the actuator is fluidically connected simultaneously to the inlet of at least two flow regulators.

That is, the flow rate of the fluid is regulated by having at least two regulators simultaneously traversed by distinct streams of the fluid, so that each regulator regulates the flow rate of the stream flowing through it.

Specifically, the fluid exiting the actuator is divided into at least two distinct streams and each distinct stream is sent to the inlet of a respective flow regulator, and more particularly at least two regulators stably connected in parallel are made to be traversed simultaneously by fluid.

One aspect of the invention relates to an apparatus for regulated injection of molten material injected from a nozzle into a mold, comprising:

- a shutter (e.g. pin-shaped) for the nozzle;
- an actuator comprising:

  a first chamber connected to a first fluid supply line external to the actuator,
  a second chamber connected to a second fluid supply line external to the actuator,

- a piston that is

  movably mounted to separate said two chambers and be able to move linearly thanks to the thrust of the fluid inside one of said two chambers, and
  connected to the shutter to move it from a closing position, where there is no passage of molten material through the nozzle, to an opening position, where there is passage of molten material through the nozzle, and vice versa;

- a fluid supply circuit that is configured to selectively inject pressurized fluid from a reservoir

  either into the first line, to bring the shutter to the opening position,
  or in the second line, to bring the shutter toward the closing position;

- N flow regulators; N >= 2, connected downstream of the second line to receive flow from the second chamber and regulate the fluid flow rate on the second line; and
- a fluid-switching system to sequentially command the N regulators by establishing which are traversed by fluid arriving (and leaving) the second chamber and transiting the second line during an injection cycle,

wherein the fluid-switching system has a configuration in which the fluid arriving/leaving the second chamber is divided into at least two distinct streams that are sent to, and pass through, a respective regulator of the N regulators (by means of the fluid-switching system at least two of the N regulators are placed, or operate as if they were, in parallel with each other).

Letting $Pt_L$ the total flow rate of fluid arriving on the second line from the actuator, the switching-system allows to achieve many different circuit configurations (topologies) for the N regulators, and thus for the value of $Pt_L$. A *topology* of the fluid-switching system corresponds to a set of regulators among the N regulators that are traversed at that instant by fluid; therefore, the topology determines the regulators that are instantaneously active (i.e. carry, namely allow the passage of, fluid) to regulate the fluid flow. The topologies thus obtainable from the switching system advantageously give a lot of degrees of freedom in programming the dynamic profile of the shutter, while maintaining sufficient circuit simplicity.

Letting $Pt_i$ the flow rate of the i-th regulator, $1 <= i <= N$, for the instantaneous flow rate on the second line $Pt_L$ the following generally holds:

$$Pt_L = \sum Pt_m,$$

where the summation index m includes the indexes of the regulators active at that instant (the summation involves only the flow rates of the regulators carrying fluid at that instant).

Assuming $Pt_i \neq Pt_j$ with $1 <= j <= N$ and $i \neq j$, flow rates other than $Pt_i$ can be obtained to adjust the shutter speed.

E.g., in the fluid-switching system, it is sufficient to activate simultaneously any two regulators of the N regulators (i.e. have fluid pass through them at the same time and in parallel with each other), thus having additional $N*(N-1)/2$ possible different flow rates, and thus as many speeds for the shutter. E.g., any three regulators of the N regulators can be activated, thus having additional $N*(N-1)(N-2)/6$ different flow rates, and so on. In general, the further combinations for Z regulators simultaneously active in parallel, $Z <= N$, are mathematically equal to the number of class-Z no-repetition combinations of N objects, $C_{N,Z}$. The switching system can be implemented, for example, with a solenoid valve having a drawer with $C_{N,Z}$ positions.

Each different flow rate corresponds to a different shutter speed: the improved degree of resolution for the shutter control is evident.

During the injection cycle, the value of m, and/or the indices of the regulators traversed by fluid in $Pt_L = \sum Pt_m$ can change.

In the apparatus and method preferably the fluid-switching system comprises K fluid switches, K $>= 1$, connected to the N regulators to determine at least $2^K$ internal states of the fluid-switching system to which there corresponds $2^K$ topologies for the fluid path, wherein in at least one of the $2^K$ topologies two of the N regulators are placed in parallel to have fluid pass through them simultaneously (and thus regulate its flow), i.e. the fluid flow is divided into at least two sub-flows each of which passes through one regulator of the N regulators.

The K fluid switches are generally means for selectively interrupting or allowing a flow of fluid between two points (or nodes) of the fluid supply system, and they may be implemented in various ways. In a preferred variation, one or each fluid switch is a solenoid valve, or is a plurality of solenoid valves connected together so as to function as a fluid switch.

The fluid-switching system in general may be made in various ways, too.

To simplify the circuit connections, preferably all N regulators have the outlet in common, namely fluidically connected to a common point, and the respective inlet fluidically connected to the fluid-switching system.

Preferably, the fluid-switching system comprises a fluid switch arranged in series with one or each of the N regulators,

each fluid switch being adapted to assume, as a function of the internal state of the fluid-switching system, two mutually exclusive configurations:

    a first configuration for isolating such regulator from the fluid supply (i.e. to bring to zero the fluid carried by that regulator), or
    a second configuration for supplying that regulator with fluid in order to regulate, via that regulator, the fluid flow rate in the second line.

In a preferred variant, the fluid-switching system comprises:

    a first fluid switch arranged in series with a first regulator of the N regulators,
    a second fluid switch arranged in series with a second regulator of the N regulators,
    the first and second fluid switches being adapted to assume, as a function of the internal state of the system, two mutually exclusive configurations:

        a first configuration for isolating the respective regulator from the fluid supply circuit, namely to bring the fluid carried by that regulator to zero, or
        a second configuration for supplying the respective regulator with fluid in order to regulate, by means of that regulator, the fluid flow rate in the second line,
        the fluid-switching system having a configuration in which the first and second fluid switches are both in the second configuration.
        Preferably, the fluid-switching system comprises a fluid switch arranged in parallel with one or each of the N regulators,
        each fluid switch being adapted to assume, as a function of the internal state of the fluid supply system, two mutually exclusive configurations:

            a first configuration for bypassing such regulator by creating a path for fluid bypassing such regulator (and thus nulling the flow rate of fluid passing through the regulator), or
            a second configuration for interrupting said bypassed fluid path in order to keep such regulator supplied with (traversed by) fluid to regulate the fluid flow rate in the second line.

In a variation, the fluid-switching system

comprises a fluid inlet for and N fluid outlets, the fluid inlet being fluidically connected to the second line and each of the N outlets being fluidically connected to a respective inlet of the N regulators,

and is configured to simultaneously fluidically connect the fluid inlet with any two or more outlets of the N fluid outlets so as to simultaneously allow fluid to flow from the fluid inlet (and thus from the second line) to at least two or more of the N regulators (which therefore operate in parallel).

In general, the switching system may comprise an element or means of internal control configured to simultaneously fluidically connect the fluid inlet with any two or more of the N fluid outlets so as to simultaneously allow fluid to flow from the fluid inlet (and thus from the second line) to at least two or more of the N regulators (which thereby operate in parallel).

In a preferred embodiment, the switching system comprises K fluid switches, each provided with

a fluid inlet and a fluid outlet, the fluid inlet being fluidically connected to the second line and the fluid outlet being fluidically connected to a respective inlet of one of the N regulators, and

a control element provided with at least two operating configurations that are switchable and mutually exclusive:

- a first configuration in which the control element fluidically connects the fluid inlet with its fluid outlet to allow the passage of flow from the second line to the respective controller, and
- a second configuration in which the control element fluidically disconnects the fluid inlet from its fluid outlet and inhibits the passage of fluid between said respective inlet of a regulator and the second line.

The control elements of the K switching devices can be controlled independently of each other, so from the second line there can arrive on the common outlet a controlled fluid flow that is the sum of the contributions of any subset of the N regulators, at most even all of them or at minimum only one of the N regulators.

That is, called $c_i$ the binary state of the i-th fluid control element in the switching system, wherein

$c_i = 1$ if the control element is in the first position, and
$c_i = 0$ if the control element is in the second position, the system makes it possible to obtain

$$Pt_L = c_1 * Pt_1 + c_2 * Pt_2 + \ldots c_K * Pt_K.$$

Since the K switching devices brought into the first configuration can be selected in any way from those available, it is understood that the switching system allows at least $2^K$ circuit configurations (and values) for $Pt_L$.

The K control elements have a total of at least $2^K$ states and generate $2^K$ circuit configurations (topologies) for the switching system.

Preferably $K <= N$, and in particular $K = N$ for maximum resolution of control.

In a preferred embodiment the control element is configured to isolate its fluid inlet from its fluid outlet in the second configuration by interrupting a fluidic communication channel between such inlets and outlets.

In another preferred embodiment, the control element is configured to isolate its fluid inlet from its fluid outlet in the second configuration by diverting a fluidic communication channel communicating with such inlet to an outlet with no discharge to the outside (e.g. a blind conduit or a dead end).

In a preferred embodiment, the control element is a movable component of the fluid switch, and is configured to physically connect, through its own displacement, the second line or the respective fluid inlet with the respective fluid outlet.

Specifically, said displacement of the control element is a translation and/or a rotation.

One or each of the dead ends may be, for example, a fluid outlet not connected to a fluid line or a closed-end (blind) channel in the fluid switch.

In a preferred embodiment, the fluid switch is a solenoid valve, where the control element is a multiple-position movable drawer of the solenoid valve. In particular, the positions are two and the drawer comprises:

a rest position in which the solenoid valve allows fluid to flow, e.g. from the second line to the inlet of only one of the N regulators; and

an energized position in which the solenoid valve isolates the respective connected regulator of the N regulators, e.g. isolates it from the second line; the energized position being reachable only starting from the rest position.

In a preferred embodiment, the system comprises an electronic circuit configured to drive the switching system in order to sequentially bring it into various configurations (topologies) among those possible during an injection cycle.

In a preferred embodiment, which facilitates programming of the dynamic profiles, the following applies:

$$Pt_1 < Pt_2 < \ldots < Pt_N \text{ or } Pt_1 > Pt_2 > \ldots > Pt_N.$$

Another aspect of the invention relates to a method of operation for an apparatus for regulated injection of molten material from a nozzle to a mold, the apparatus comprising the features defined above (in one or more variations), with the step of

sequentially connecting the second line simultaneously to R of the N inlets of N flow regulators, $1 <= R <= N$, by modifying the state of R control elements provided in R fluid switches, in particular by means of a single switching of R control elements, more preferably by displacing (e.g. by rotating and/or translating) an internal component of the R switching devices, more particularly the relevant control element, and

isolating the second line from all N inlets by changing the state of R control elements provided in the R fluid switching devices, more preferably by means of a single switching of R control elements, more preferably by displacing (e.g. by rotating and/or translating) an internal component of the R fluid switching devices, more particularly the relevant control element.

Preferably, for the reasons already stated, $R = N$.

In a preferred embodiment, one or each fluid switch is configured to connect the second line to an inlet of the respective regulator through a single switching of its own control element.

In a preferred embodiment, the state of one or each fluid switch is modified to isolate from the second line the respective regulator inlet by removing the power supply to the switch (in order to bring the fluid switch system to its rest position).

In a preferred embodiment, the state of one or each fluid switch is modified (e.g. to change the state of the respective control element):

- by modification or modulation of only one electrical signal, preferably transmitted on only one control power line or control channel (wired or wireless); and/or
- only by electrically powering or isolating the switch.

The fluid may be e.g. a liquid, such as oil, or compressed air.

The advantages of the invention will be even clearer from the following description of a preferred system, in which reference is made to the attached drawing wherein

- figures 1-4 show general diagrams of the system;
- figures 5-7 show variations of the system.

In the figures equal elements are indicated by equal numbers. In order not to crowd the figures some repeated or similar elements are not numbered.

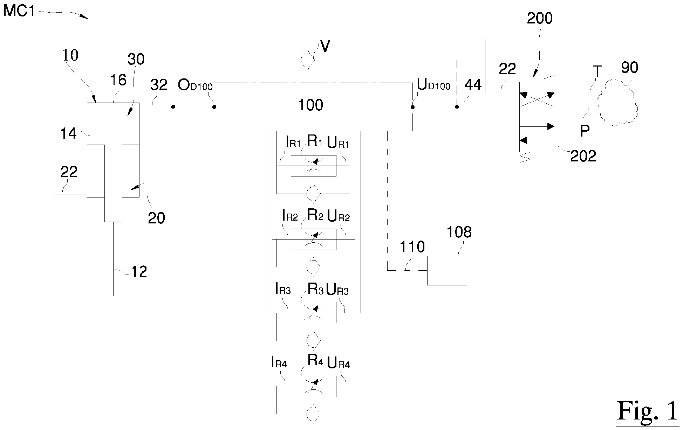

The system MC1 in Fig. 1 is used to drive an actuator 10 in an injection molding system. The actuator 10 is e.g. attached to a support (not shown), such as a hot runner (manifold) or a plate or a mold, and is used to move (directly, or indirectly through interposed known motion-transforming mechanisms, not shown) at least one shutter 12 for a known injection nozzle (not shown) via a piston 14. The piston 14 is linearly movable within a cavity defined by a casing 16 of the actuator 10. The cavity is divided by the piston 14 into a first chamber 20, communicating with a first line 22 external to the actuator 10, and a second chamber 30 communicating with a second line 25 external to the actuator 10. The actuator 10 may be made up of a single piston 14, as shown in Fig.1, or of one or more overlapping and interconnected (bunk-like) pistons, not shown, so as to define multiple first chambers and multiple second chambers communicating with the first line 22 and the second line 32, respectively. This variant allows the fluid thrust surface to be increased without having to increase the diameter of the piston and the cylinder.

The chamber 20 is usually isolated from the chamber 30, however, situations may arise where means need to be provided to connect the two chambers 20, 30 (for pressure balancing in the lines 22, 32).

Through the lines 22, 32, fluid can be injected or drawn into/from the chamber 20 or 30 on opposite sides of the piston 14, so that it can be moved linearly in opposite directions by displacing the shutter 12 accordingly. The movement of the latter determines the opening or closing of the nozzle with the consequent passage, toward the mold cavity, or obstruction of the molten material.

The fluid is taken from a fluid reservoir 90. P denotes the incoming pressure flow line from the reservoir 90 and T denotes a fluid discharge/drain line.

The flow of fluid from the reservoir 90 is controlled by a solenoid valve 200. It has a displaceable drawer 202 that serves to reverse the direction of fluid flow in the lines 22, 32, and 44. Such direction of flow in turn determines the direction of travel of the piston 14, and thus of the shutter 12, in opening or closing the injector.

The shutter 12 is e.g. a well-known valve pin, but other means of shuttering controlled by the translation of the piston 14 could be used, e.g. guillotine shutters as in EP1409222, EP4392220, or EP4392221.

*FIGURE 1*

Between the line 32 and a port 44 of the solenoid valve 200 (an inlet or outlet, depending on the fluid direction) is inserted a fluid-switching system 100 to which two or more flow regulators $R_1$; $R_2$,... $R_N$, $N >= 2$ are fluidically connected.

In the illustrated example in Fig. 1 $N = 4$.

In general in the drawings the value of N is only illustrative, as N can take any value $>= 2$.

Called here and hereinafter $Pt_i$ the flow rate of the i-th regulator, $1 <= i <= N$, we make the simplifying but unnecessary assumption that $Pt_i \neq Pt_j$ with $1 <= j <= N$ and $i \neq j$.

Each of the flow regulators $R_1 \div R_N$ has a respective fluid inlet $I_{R1} \div I_{RN}$ and a respective fluid outlet $U_{R1} \div U_{RN}$, all connected to the system 100.

The flow regulators $R_1 \div R_N$ regulate the flow rate of fluid from the line 32 to the line 44, and then to the reservoir 90.

The amount of fluid entering from the line 32 into the system 100 is the same as that exiting from the line 44, and vice versa.

The system 100 has an inlet $O_{D100}$ with the function of receiving fluid from the line 32 and channeling it through one or more of the flow regulators $R_1 \div R_N$. From the flow regulators $R_1 \div R_N$ the fluid is sent in a regulated manner to the line 44 through an outlet $U_{D100}$. The fluid entering at the inlet $O_{D100}$ is the same as that exiting from the outlet $U_{D100}$, or vice versa.

When the fluid arrives from the line 32 (opening of the shutter 12), it passes through at least one inlet $I_{R1} \div I_{RN}$, arrives at the respective outlet $U_{R1} \div U_{RN}$, and exits on the line 44.

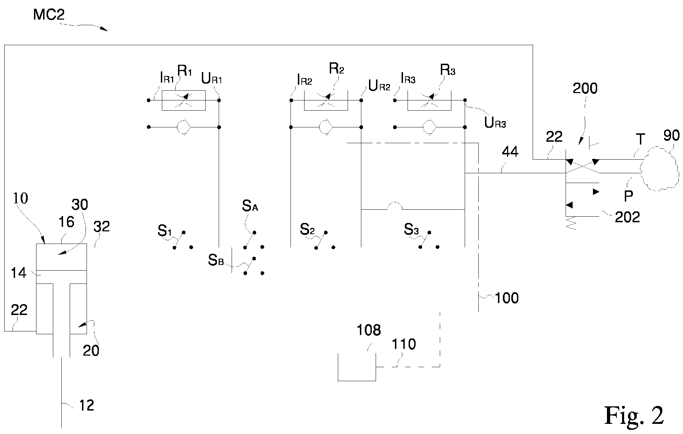

In each variant described here, when the fluid runs in the reverse direction (closing of the shutter 12) the regulators $R_1 \div R_N$ do not intervene because the fluid passes through (known) one-way valves placed in parallel with the regulators $R_1 \div R_N$, bringing the piston 14 to closing. Such one-way valves are provided for safety reasons but not necessary. They can be replaced, e.g., by a one-way valve V placed between the inlet $O_{D100}$ and outlet $U_{D100}$, or as a bridge on the lines 32, 44, with bypass function. For the same reason, it is preferable that at least one of the fluid switches $S_1 \div S_N$, see figs. 2-4, remain in the fluid passage configuration in the absence of power supply.

To regulate the fluid flow rate, the system 100 internally comprises fluid paths that are switchable at will among various topologies each of which is associated with a different fluid path from the line 32 to the line 44 and that includes or excludes some flow regulators $R_1 \div R_N$.

That is, the fluid entering the inlet $U_{D100}$ from the line 32 can, before exiting on the line 44,

    pass through only the regulator $R_1$, or
    traverse only the regulator $R_2$, or
    traverse only regulator the $R_3$, or
    traverse only the regulator $R_4$, or
    traverse only the parallel of regulator $R_1$ and $R_2$, or
    traverse only the parallel of regulator $R_1$ and $R_3$, etc.,
    with other combinations among those possible of two or more regulators $R_1 \div R_N$ in parallel.

To limit the internal complexity of the system 100, the latter may also allow only some of the possible combinations of two or more regulators in parallel.

In any case, the range of regulations achievable in the MC1 system is evident.

The internal state of the system 100, and thus the actual topology of the fluid paths within the system 100, is preferably controllable by an electronic unit 108 via a signal line 110. The electronic unit 108 can send electrical signals on the line 110 to determine the state of the system 100. Consequently, in the MC1 system during the injection cycle a sequence can be independently programmed to determine, instant by instant, which one or ones of the regulators $R_1 \div R_N$ is/are connected to the inlet $O_{D100}$ to bring fluid to the outlet $U_{D100}$.

Although in the drawings the regulators $R_1 \div R_N$ are drawn outside the system 100, they may be integrated into it.

*FIGURE 2*

The general system 100 may be implemented in many ways by taking advantage of all the known techniques and means of fluid switching.

Fig. 2 shows as an example a variant MC2 in which a possible internal structure of the system 100 is illustrated.

Here as an example three flow regulators $R_1 \div R_N$, N = 3 are used.

In parallel to each regulator $R_1 + R_N$ is fluidically connected a fluid switch $S_1 \div S_N$. For this purpose, each inlet $I_{R1} \div I_{RN}$ and each respective outlet $U_{R1} \div U_{RN}$ are connected by a line section to the system 100 and to opposite ends of a respective switch $S_1 \div S_N$.

To demonstrate the combinatorial potential of the system 100, the example shows the regulator $R_1$ in series with the parallel of regulators $R_2$ and $R_3$. The outlet $U_{R1}$ is connected to the inlets $I_{R2}$ and $I_{R3}$ via respective switches $S_A$ and $S_B$. Other different series/parallel topologies are possible for the fluid switches $S_1 \div S_N$ and such topologies are selectable via auxiliary fluid switches such as $S_A$ and $S_B$.

Each fluid switch $S_1 \div S_N$ and $S_A$, $S_B$ has two states or configurations:

    one in which it allows fluid to pass through it, and
    one in which it fluidically isolates from each other the lines connected to its ends.

In essence, each fluid switch behaves for the fluid as an electrical switch behaves for electric current (hence the analogy of its symbol).

Looking at the schematic in Fig. 2, it can be understood that by varying the state of each switch $S_1 \div S_N$, one can select which of the regulators $R_1 \div R_N$ conducts fluid from the line 32 to the line 44. Keeping in mind that when one of the $S_1 \div S_N$ switches placed in parallel with a regulator $R_1 \div R_N$ becomes fluid-conducting ("active") in fact excludes that regulator from the fluid circuit, the following table can be worked out:

| active switch | fluid-carrying regulator |
|---|---|
| $S_1 + S_A$ | $R_2$ |
| $S_1 + S_B$ | $R_3$ |
| $S_2 + S_3 + S_A$ | $R_1$ |
| $S_1 + S_4 + S_B$ | $R_3$ simultaneously with $R_2$ |

It can be seen that in addition to a single regulator $R_1 \div R_N$ the parallel of two of them can also be exploited. By complicating or modifying the network of switches $S_1 \div S_N$ and $S_A$, $S_B$ it is possible to increase the combinations that can be achieved.

In particular, the MC2 system illustrates how one or more of the regulators $R_1 \div R_N$ can be excluded from the fluid circuit by placing the switches $S_1 \div S_N$ in parallel to it.

Also note the equivalence between the diagram in Fig. 2 and that in Fig. 1.

*FIGURE 3*

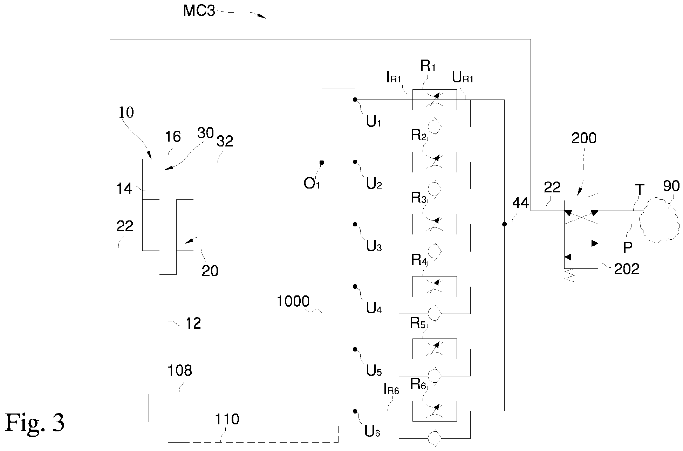

Fig. 3 shows another example of variant MC3 in which a possible simplified connection network for the regulators $R_1 \div R_N$ is illustrated. This time as an example N = 6.

It can be seen from Fig. 2 that the inlets and/or outlets of some of the regulators $R_1 \div R_N$ require switches $S_A$, $S_B$ to avoid the series of regulators $R_1 \div R_N$ or to direct the fluid in several parallel branches. In itself, the series is not a problem, because in the series of regulators $R_1 + R_N$ the one with lower flow rate would command. However, it is convenient as much as possible to minimize the switches $S_1 \div S_N$ and/or $S_A$, $S_B$. Fig. 3 illustrates for this purpose the simplification of connecting all together the outlets $U_{R1} \div U_{R6}$ thus arranging all regulators $R_1 \div R_N$ already in parallel.

Between the line 32 and the inlets $I_{R1} \div I_{R6}$ is respectively installed a fluid-switching system 1000 having an inlet $O_1$ that receives fluid from the line 32 and routes it to one or more of its control outlets $U_1 \div U_6$. To each control outlet $U_1 \div U_6$ is connected one of the inlets $I_{R1} \div I_{R6N}$, respectively.

The system 1000 is able to individually change the internal fluid path running from the inlet $O_1$ to each of the control outlets $U_1 \div U_6$, so as to

convey the incoming fluid at the inlet $O_1$ to only one among the control outlets $U_1 \div U_6$ or
partition the incoming fluid at the inlet $O_1$ to two or more of the control outlets $U_1 \div U_6$.

It is then understood that the regulators $R_1 \div R_6$ can be inserted into the fluid circuit between the line 32 and the line 44 with $2^6$ combinations, depending on the internal topological state of the system 1000. Then in general the fluid can potentially move from the line 32 to the line 44 with $2^N$ different flow rates and the piston 14 can then move with $2^N$ different velocities (it also depends on the $Pt_i$s).

E.g. it can be: $Pt_1 < Pt_2 < ... < Pt_N$ or $Pt_1 > Pt_2 > ... > Pt_N$.

This relationship favors, e.g., the programming of the speed profiles for the shutter 12 that have strictly increasing or decreasing speed ramps.

If, e.g., at a certain instant in the system 1000 only the outlets $U_1$, $U_3$ and $U_6$ carry fluid and all others do not, the flow rate Pt on the lines 32, 44 is $Pt_1 + Pt_3 + Pt_6$.

The features expressed above are an advantage in many applications where it is necessary to program a complex speed profile for the shutter 12, e.g. a profile with many different opening or closing speeds. The MC3 system ensures that many different speeds can be achieved with limited number of components and especially of fluid regulators.

*FIGURE 4*

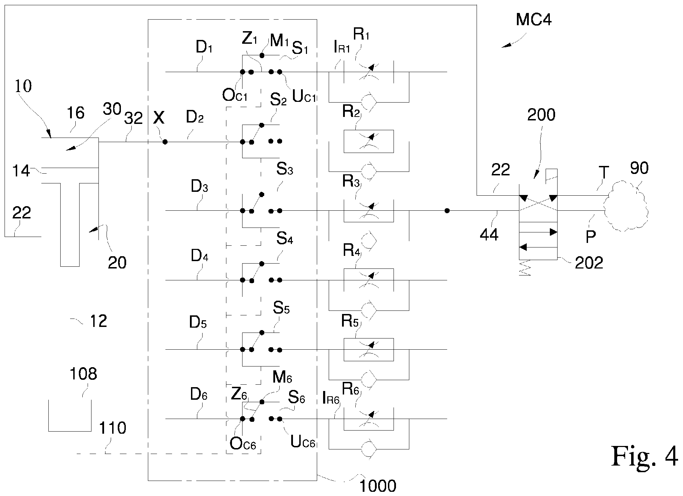

Fig. 4 shows an apparatus MC4 comprising a preferred embodiment of the internal structure of the system 1000 in Fig. 3.

The fluid-switching system 1000 here comprises N flow switches $S_1 \div S_N$ having

a respective inlet $O_{C1} \div O_{CN}$,
a respective fluid control outlet $U_{C1} \div U_{CN}$,
a respective dead point $M_1 \div M_N$, and
a respective switchable control element $Z_1 \div Z_N$.

In the example it is still N = 6.

The outlets $U_{C1} \div U_{C6}$ are connected to inlets $I_{R1} \div I_{R6}$ respectively, and each inlet $O_{C1} \div O_{C6}$ is connected to the line 32, e.g. at a common point X, to receive fluid from it. From point X there start N = 6 fluid shunts $D_1 \div D_6$ hat feed simultaneously and respectively the inlets $O_{C1} \div O_{C6}$.

Each switch $S_1 \div S_6$ has at least two configurations:

- an enabling configuration, to fluidically connect its own inlet $O_{C1} \div O_{C6}$ with the respective outlet $U_{C1} \div U_{C6}$ and allow passage of fluid through that switch $S_1 \div S_6$ so that the respective outlet $D_1 \div D_6$ conducts fluid to the respective downstream regulator $R_1 \div R_6$, and
- an isolation configuration, to fluidically isolate its own inlet $O_{C1} \div O_{C6}$ from the respective outlet $U_{C1} \div U_{C6}$ and prevent fluid from the line 32 from reaching the respective downstream regulator $R_1 \div R_N$ which remains isolated from the fluid circuit, does not carry fluid and does not participate in regulation.

For the purpose preferably each element $Z_1 \div Z_N$ is switchable, more preferably movable, for

putting the respective outlet $U_{C1} \div U_{CN}$ into fluidic communication with the respective inlet $O_{C1} \div O_{CN}$ or
interrupting the fluidic communication between the respective inlet $O_{C1} + O_{CN}$ and the respective outlet $U_{C1} \div U_{CN}$, e.g. by fluidically connecting the respective inlet $O_{C1} \div O_{CN}$ with a dead point $M_1 \div M_N$ or an additional control outlet (not shown) but disconnected from the fluid circuit.

The result is that each element $Z_1 \div Z_N$ is configured for:

> switching the line 32 to the inlet of the respective regulator $R_1 \div R_N$ and thus insert the respective regulator $R_1 \div R_N$ into the fluid circuit or
> isolating the respective regulator $R_1 \div R_N$ from the line 32.

In Fig. 4 as an example only the control element $Z_1$ is shown schematically in the enabling configuration.

Each control element $Z_1 \div Z_N$ is preferably controllable by a bus line 110 driven by the electronic unit 108. The electronic unit 108 can send N electrical signals on the bus 110 to determine the binary state of each control element $Z_1 \div Z_N$. Consequently, in the MC4 system during the injection cycle one can independently program which of the regulators $R_1 \div R_N$ is connected to the line 32 to bring fluid to the outlet 44.

*FIGURE 5*

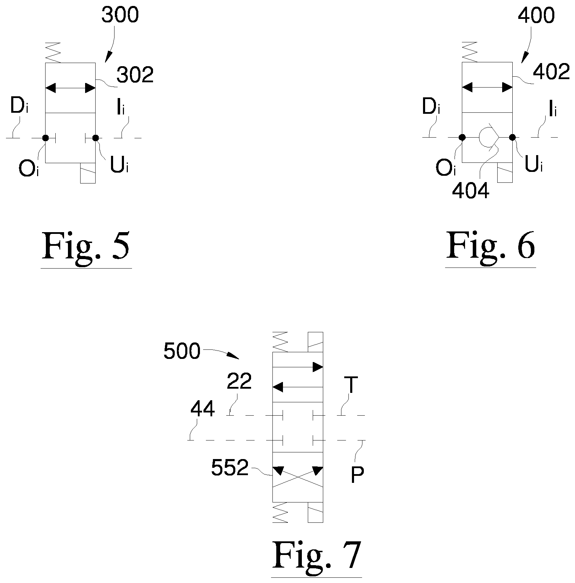

A preferred embodiment of the MC4 system envisages for one or each of the switches $S_1 \div S_N$ to be implemented as in Fig. 5, i.e. with a solenoid valve 300 of the monostable type. The solenoid valve 300 comprises a drawer 302 having only two positions:

> an idle position (or in the absence of power supply) in which it allows the fluid to flow through it and the shutter 12 can go into the closed position; and
> an energized position in which the respective regulator $R_1 + R_N$ is isolated from the line 32.

With this configuration, the system MC4 also allows the shutter 12 to be blocked for a certain time even during the closing phase.

*FIGURE 6*

Another preferred embodiment of the MC4 system envisages one or each of the switches $S_1 \div S_N$ being made as in Fig. 6, that is, with a solenoid valve 400 of the monostable type.

The solenoid valve 400 comprises a drawer 402 which has only two positions:

> an idle position (or in the absence of power supply) in which it allows fluid to flow through it and the shutter 12 can go into closed position; and
> an energized position in which the respective regulator $R_1 + R_N$ is isolated from the line 32 only in one flowing direction of the fluid. For this purpose, the drawer 402 comprises in this position a one-way valve 404 arranged to prevent fluid flow to the common outlet 44 but to allow fluid flow to the line 32.

PREFERRED GENERAL OPERATION

At rest, the solenoid valve 200 remains in a first position in which it allows fluid to flow from the chamber 20 to the line 22 and then to the drain T. The solenoid valve 200 is then electrically switchable into another different position, an energized position (illustrated in Fig. 1), in which it allows fluid to flow from the reservoir 90 to the actuator 10, i.e. pressurized fluid coming from the reservoir 90 can flow through the line 22 to the chamber 20 and fluid can flow out of the chamber 30 to the line 32. In this case, the shutter 12 is in motion toward the open position. By returning the solenoid valve 200 to the rest position (not shown) one reverses the fluid direction and the shutter 12 can move toward the closed position.

At rest preferably the switches $S_1 \div S_N$ remain in the isolation configuration, and the fluid bypasses the regulators $R_1 \div R_N$ through the non-return valves arranged in bypass configuration or the valve V.

The switches $S_1 \div S_N$ are then individually switchable to the enabling configuration to allow fluid from the chamber 30 to flow on the line 32 to one or more of the regulators $R_1 \div R_N$.

Each regulator $R_1 \div R_N$, when actively inserted in the fluid circuit, is similar to the braking action, along a downhill path, offered by an internal combustion engine as the gear engaged changes (engine brake).

By limiting the exiting speed of the fluid from the chamber 30 one limits the entry speed of the fluid into the chamber 20. The regulators $R_1 \div R_N$ allow, in addition to smooth movement, the setting of different speeds of movement of the piston 14 along its stroke. Since the regulators $R_1 \div R_N$ are preferably insertable into the fluid circuit with $2^N$ different combinations, the fluid can potentially move from the line 32 to the outlet 44 with $2^N$ different flow rates and the piston 14 can move with $2^N$ different speeds (it also depends on the $P_i$s).

*FIGURE 7*

In all of the variants the solenoid valve 200 is replaceable by a solenoid valve 500 provided with a displaceable drawer 552 having

> a rest position (shown in the figure) in which it blocks the transit of fluid on the lines 22 ,32 and 44, so the piston 14 remains stationary;
> a first excitation position, in which some incoming fluid from the reservoir 90 can travel along the line 22 to the chamber 20 and some fluid can flow out of the chamber 30 to the line 32 (shutter 12 moving to the opening position); and
> a second energized position, in which some incoming fluid from the reserve 90 can travel through the line 44 and 32 toward the chamber 30 and fluid can exit the chamber 20 toward the line 22 (shutter 12 moving toward the closed position).

In general, the following additional variants apply to the above variants.

The solenoid valve 200 and/or 300 and/or 400 and/or 500 is e.g. of commercial type, with excitation coils and return springs, and/or may be replaced by an equivalent flow-diverting device.

Preferably, the electronic controller 108 controls at least the switch 100 and/or the solenoid valves 200, 300, 400 and 500 and/or a pump for moving the fluid from the reservoir 90.

In general, the regulators $R_1 \div R_N$ may be the same or different from each other, just as they may be set/adjusted in the same way or differently.

In general, the system 100 can block the shutter 12 for a certain time during the opening and/or closing phase by isolating the inlet $O_{D100}$ from the outlet $U_{D100}$ (by bringing all switches $S_1 \div S_N$ to the fluid isolation configuration).

With the described systems, the dynamic profiles for the shutter shown in PCT/IB2019/053936, IT102017000037002, IT102016000080198, IT102016000055364, IT102015000008368, IT-TO2014A001030, ITTO2014A001021, IT-TO2014A000701, WO2012/074879A1, WO2012/087491A1, WO2018/020177A1, can be achieved

**Claims**

1. Method of regulating the flow of molten material injected from a nozzle into a mold, wherein during an injection cycle

   pressurized fluid is selectively injected from a reservoir into an actuator that drives a shutter of the nozzle;
   the shutter is moved to an opening or closing position according to the direction of flow of the fluid;
   during the shutter opening phase, a line, carrying the fluid exiting the actuator, is fluidically connected simultaneously to the inlet of at least two flow regulators so that they are traversed by fluid to regulate the flow rate thereof.

2. Method according to claim 1, wherein the injected fluid is divided into at least two distinct streams and each distinct stream is sent to the inlet of a respective flow regulator so that it is traversed by fluid to regulate the flow rate thereof.

3. Method according to claim 1 or 2, wherein a line carrying the fluid arriving from the actuator is simultaneously connected to m regulators of N fluid regulators so that they carry fluid; N >= 2 and m <= N,

   so that, called $Pt_i$ the flow rate of the i-th regulator, $1 \le i \le N$,
   the instantaneous flow rate $Pt_L$ on said line is $Pt_L = \sum Pt_m$,
   where the summation index m includes the indices of the regulators traversed by fluid.

4. Method according to claim 3, wherein during the injection cycle the value of m varies.

5. Method according to claim 3 or 4, wherein during the injection cycle
   in $Pt_L \div \sum Pt_m$, the indices of the regulators traversed by fluid change.

6. Molten material regulated-injection apparatus for material injected from a nozzle into a mold, comprising:

   - a shutter for the nozzle;
   - an actuator comprising:

     • a first chamber connected to a first fluid supply line external to the actuator,

       • a second chamber connected to a second fluid supply line external to the actuator,

     • a piston which is

       movably mounted to separate said two chambers and to be able to move linearly thanks to the thrust of the fluid inside one of the two said chambers, and connected to the shutter to move it from a closing position, in which there is no passage of molten material through the nozzle, to an opening position, in which there is passage of molten material through the nozzle, and vice versa;

         - a fluid supply circuit which is configured to selectively inject pressurized fluid from a reservoir

   either into the first line, to move the shutter towards the opening position,
   or into the second line, to move the shutter towards the closing position;

     - N flow regulators; N >= 2, connected downstream of the second line to receive flow from the second chamber and regulate the flow rate of fluid exiting the second line, and
     - a fluid-switching system for sequentially commanding the N regulators establishing which ones are crossed by the fluid arriving from the second chamber and in transit on the second line during an injection cycle,

wherein
the fluid-switching system has a configuration in which
the fluid arriving from the second chamber is divided into at least two distinct streams that are sent to, and pass through, a respective regulator of the N regulators.

7. Apparatus according to claim 6, wherein the fluid switching system comprises K fluid switches, K >= 1, connected to the N regulators to determine at least $2^K$ internal states of the fluid switching system corresponding to $2^K$ topologies of the fluid circuit, wherein in at least one of the $2^K$ topologies two of the N regulators are placed in parallel to be crossed simultaneously by fluid and thus regulate its flow-rate.

8. Apparatus according to claim 6 or 7, wherein all the N regulators have their outlet fluidically connected to a common point, and their respective inlet fluidically connected to the fluid switching system.

9. Apparatus according to claim 6 or 7 or 8, wherein the fluid switching system comprises:

- a first fluid switch arranged in series with a first regulator of the N regulators, and
- a second fluid switch arranged in series with a second regulator of the N regulators,
the first and second fluid switches being adapted to assume, depending on the internal state of the system, two mutually exclusive configurations:

a first configuration for isolating the respective regulator from the fluid supply circuit, i.e. bringing to zero the fluid carried by that regulator, or
a second configuration for supplying the respective regulator with fluid in order to regulate, via that regulator, the flow rate of the fluid in the second line,

the fluid switching system having a configuration in which the first and second fluid switches are both in the second configuration.

10. Apparatus according to claim 6 or 7 or 8 or 9, wherein the fluid switching system comprises K fluid switches, K <= **N,** each being provided with

• a fluid inlet and a fluid outlet, the fluid inlet being fluidically connected to the second line and the fluid outlet being fluidically connected to a respective inlet of one of the N regulators, and

• a control member provided with at least two operating configurations which are switchable and mutually exclusive:

- a first configuration wherein the control member fluidically connects the fluid inlet with its fluid outlet to allow fluid passage from the second line to the respective regulator, and
- a second configuration wherein the control member fluidically disconnects the fluid inlet from its fluid outlet and inhibits fluid passage between said respective inlet of a regulator and the second line.

Fig. 1

Fig. 2

Fig. 3

Fig. 4

300

302

D_i    I_i

O_i    U_i

## Fig. 5

400

402

D_i    I_i

O_i    U_i

404

## Fig. 6

500

22    T

44

552    P

## Fig. 7

Europäisches
Patentamt

European
Patent Office

Office européen
des brevets

# EUROPEAN SEARCH REPORT

**Application Number**

EP 25 19 6302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 490 777 A1 (RUNIPSYS EUROPE [FR]) 5 June 2019 (2019-06-05) * paragraphs [0058] - [0069]; figures 1-7 * ----- | 1-3,5-10 | INV. B29C45/28 B29C45/82 |
| Y | CN 101 216 058 A (BEIJING NORTH MICRO ELECT BASE [CN]) 9 July 2008 (2008-07-09) | 1-3,5-10 | |
| A | * abstract; figure 3 * * page 1 * * pages 6-9 * ----- | 4 | |
| A | FR 3 076 482 A1 (RUNIPSYS EUROPE [FR]) 12 July 2019 (2019-07-12) * figures 1-5 * ----- | 1,6 | |

**TECHNICAL FIELDS SEARCHED (IPC)**

B29C

The present search report has been drawn up for all claims

| Place of search | Date of completion of the search | Examiner |
|---|---|---|
| Munich | 13 January 2026 | Raicher, Gerald |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

                                      

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 19 6302

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2026

| Patent document cited in search report | | Publication date | Patent family member(s) | | Publication date |
|---|---|---|---|---|---|
| EP 3490777 | A1 | 05-06-2019 | CA | 3031908 A1 | 01-02-2018 |
| | | | CN | 109689335 A | 26-04-2019 |
| | | | EP | 3490777 A1 | 05-06-2019 |
| | | | ES | 2798428 T3 | 11-12-2020 |
| | | | FR | 3054473 A1 | 02-02-2018 |
| | | | KR | 20190034303 A | 01-04-2019 |
| | | | PT | 3490777 T | 14-07-2020 |
| | | | US | 2020180201 A1 | 11-06-2020 |
| | | | WO | 2018020177 A1 | 01-02-2018 |
| CN 101216058 | A | 09-07-2008 | NONE | | |
| FR 3076482 | A1 | 12-07-2019 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3490777 A
- EP 1409222 A
- EP 4392220 A
- EP 4392221 A
- WO IB2019053936 A
- IT 102017000037002
- IT 102016000080198
- IT 102016000055364
- IT 102015000008368
- IT TO20141030 A
- IT TO20141021 A
- IT TO20140701 A
- WO 2012074879 A1
- WO 2012087491 A1
- WO 2018020177 A1